**Europäisches Patentamt**

(19) **European Patent Office**

**Office européen des brevets**

(11) Publication number: **0 174 251**
**B1**

(12) **EUROPEAN PATENT SPECIFICATION**

(45) Date of publication of patent specification: **29.11.89**

(21) Application number: **85401682.1**

(22) Date of filing: **26.08.85**

(51) Int. Cl.⁴: **H 02 B 13/06**

(54) **Gas-insulated switchgear.**

(30) Priority: **28.08.84 JP 177417/84**

(43) Date of publication of application:
**12.03.86 Bulletin 86/11**

(45) Publication of the grant of the patent:
**29.11.89 Bulletin 89/48**

(84) Designated Contracting States:
**AT BE CH DE FR GB IT LI NL SE**

(56) References cited:
**DE-A-3 215 236**

(73) Proprietor: **MERLIN GERIN**
**Rue Henri Tarze**
**F-38050 Grenoble Cédex (FR)**

(72) Inventor: **Shimoda, Sumio**
**c/o NISSIN ELECTRIC CO. LTD. 47, Umezu**
**Takase-cho Ukyo-ku Kyoto (JP)**
Inventor: **Miyazaki, Masanori**
**c/o NISSIN ELECTRIC CO. LTD. 47, Umezu**
**Takase-cho Ukyo-ku Kyoto (JP)**
Inventor: **Shimasaki, Toshio**
**c/o NISSIN ELECTRIC CO. LTD. 47, Umezu**
**Takase-cho Ukyo-ku Kyoto (JP)**

(74) Representative: **Kern, Paul et al**
**Merlin Gerin Sce. Brevets 20, rue Henri Tarze**
**F-38050 Grenoble Cédex (FR)**

## Description

The invention relates to a gas-insulated switchgear in accordance with the preamble of claim 1.

For example, DE—A—3 215 236 discloses such a gas-insulated switchgear.

A gas-insulated switchgear installed in a substation or the like comprises a plurality of feeder units within which cables are connected to buses, and bus connecting units interconnecting the buses of the feeder units. A feeder unit for such a gas-insulated switchgear has been proposed. As illustrated in Fig. 8, the proposed feeder unit comprises a breaker unit 1 having within a horizontally elongate vessel or tank breakers and an earthing switch which is closed for inspecting the breakers, two bus units 2 and 3 each having within a vessel connected to the upper part of the vessel of the breaker unit 1 a bus and a bus disconnecting switch, a cable head unit 4 having within a vessel connected to the backside of the vessel of the breaker unit 1 a line disconnecting switch and a cable head, and an operating set 5 disposed in front of the vessel of the breaker unit.

## Problems to be solved by the invention

In the above-mentioned gas-insulated switchgear, since the cable head unit 4 is disposed on the backside of the vessel of the breaker unit 1, the gas-insulated switchgear has a large depth and requires a large floor space for installation. Furthermore, since the cable head unit of the above-mentioned gas-insulated switchgear is disposed on the backside of the gas-insulated switchgear, a cable for applying a test voltage needs to be connected to the gas-insulated switchgear in order to carry out a withstand voltage test, which requires a large work space to be secured on the backside of the gas-insulated switchgear.

Furthermore, in the bus connecting unit, it is usual to provide the conductive bodies of the live part for connecting buses to the opposite terminals of the breaker with current transformers respectively, however, it is difficult to secure a space for disposing current transformers in the above-mentioned constitution.

Accordingly, it is an object of the present invention to provide a gas-insulated switchgear capable of solving those problems and having therefore the features-mentioned in claim 1.

According to a first embodiment of this application, the length of a feeder unit for leading in cables is reduced to reduce the space for installing a gas-insulated switchgear. In a gas-insulated switchgear according to the invention, a feeder unit comprises a main breaker unit having a horizontally elongate main breaker vessel containing at least breakers each disposed with the breaking section thereof in a horizontal position, one or a plurality of main bus units each having a main bus vessel connected to a top surface of the main breaker vessel and containing a bus together with a bus disconnecting switch, and a cable head unit having a cable head vessel connected to a bottom surface of the main breaker vessel and containing a cable head together with a line disconnecting switch.

According to a second embodiment of this application, improvements are made in a gas-insulated switchgear having a plurality of the above-mentioned feeder units and bus connecting units interconnecting the buses of a plurality of the feeder units. According to the invention, a bus connecting unit comprises a bus connecting breaker unit and a bus connecting bus unit. The bus connecting breaker unit comprises a horizontally elongate bus connecting breaker vessel disposed between the main breaker vessels of a plurality of feeder units, breakers each disposed within the bus connecting breaker vessel with the breaking section thereof in a horizontal position, and current transformers connected to the opposite terminals of the breakers. The bus connecting bus unit comprises a bus connecting bus vessel connected to the upper surface of the bus connecting breaker vessel, a bus received in the bus vessel and a bus disconnecting switch disposed within the bus vessel. The bus connecting breaker vessel is formed so that the upper surface thereof is disposed flush with the upper surface of the main breaker vessel and the lower surface thereof is disposed below the lower surface of the main breaker vessel. The main bus unit and the bus connecting bus unit are disposed at the same level and are interconnected.

## Functions of the invention

As mentioned above, disposing the cable head unit under the main breaker unit reduces the depth of the switchgear greatly as compared with disposing the cable head unit on the backside of the main breaker unit, and thereby the space for installation is reduced and costs of installing a gas-insulated switchgear are reduced. When the cable head unit is disposed under the main breaker unit, the height of the gas-insulated switchgear is increased. However, any problem does not arise if the height of a gas-insulated switchgear is increased to some extent as far as the height is within a limit for transportation, and increase in height does not affect the cost so much.

Furthermore, disposing the cable head unit under the main breaker unit in the above-mentioned manner enables the connection of a test cable to the cable head unit from the front side of the gas-insulated switchgear for withstand voltage test, and hence it is unnecessary to secure a wide work space behind the gas-insulated switchgear and the size of a building for accommodating the gas-insulated switchgear can be reduced.

Still further, since the breakers are disposed in the lower part of the vessel in a horizontal position, works for the maintenance and inspection of the breaker are facilitated.

Furthermore, when a gas-insulated switchgear includes a bus connecting unit, the cable head unit is unnecessary. Therefore, as in the invention, the bottom surface of the bus connecting breaker vessel can be disposed below the bottom surface of the main breaker vessel of the feeder unit. Accordingly, the internal space of the bus connecting breaker vessel can be expanded with the upper surface of the bus connecting breaker vessel disposed flush with the upper surface of the main breaker vessel, and current transformers can be connected to conductive bodies of the live part connected to the opposite terminals of the breakers.

Preferred embodiments of the present invention will be described hereinafter, in connection with the accompanying drawings.

Figure 1 is a schematic view showing the constitution of a preferred embodiment of the invention;

Figure 2 is a skeleton diagram showing the electrical constitution of each phase of the embodiment of Figure 1;

Figure 3 is a schematic view showing the constitution of another embodiment of the invention;

Figure 4 is a skeleton diagram showing the electrical constitution of each phase of the embodiment of Figure 3;

Figure 5 is a schematic view showing the constitution of still further embodiment of the invention;

Figure 6 is a schematic view showing the constitution of a bus connecting unit according to the invention;

Figure 7 is a schematic front elevation showing a mode of connection of feeder units with the bus connecting unit of Figure 6; and

Figure 8 is a schematic side elevation of a feeder unit of a conventional gas-insulated switchgear.

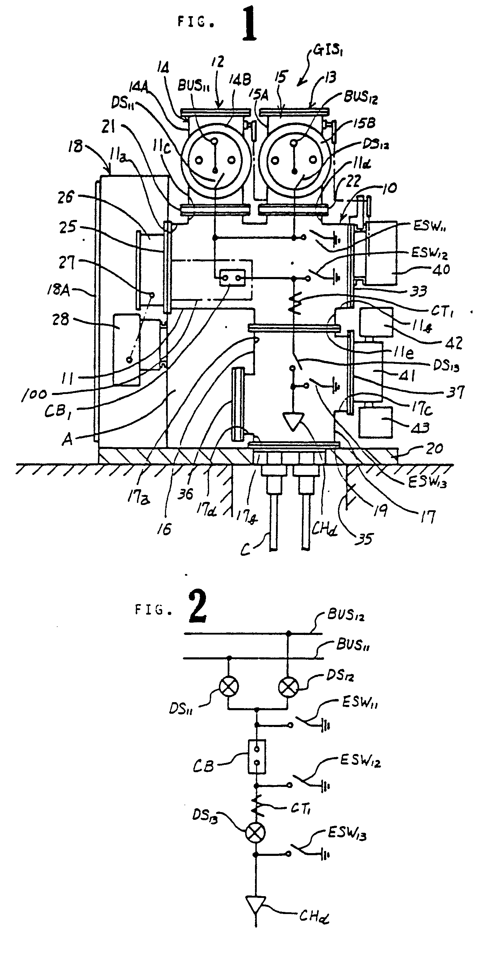

In Fig. 2, there are shown a main breaker CB1, a first main bus BUS11, a second main bus BUS12, first and second bus disconnecting switches DS11 and DS12 interposed between the BUS11 and the breaker CB1 and between the BUS12 and the breaker CB1 respectively, earthing devices ESW11 and ESW12 provided between the opposite ends of the breaker CB1 and earth-potential parts respectively for inspecting the breaker, a cable head CHd, a line disconnecting switch DS13 provided between the cable head and the breaker, a cable head earthing device ESW13, and a current transformer CT1 mounted on a live conductor interconnecting the breaker CB1 and the disconnecting switch DS13.

In Fig. 1, indicated at 10 is a main breaker unit constituted by disposing the main breakers CB1, the main breaker inspection earthing devices ESW11 and ESW12 and the current transformer CT1 within a horizontally elongate cylindrical main breaker vessel 11, at 12 and 13 are first and second main bus units constituted by disposing the main buses BUS11 and BUS12 and the bus disconnecting switches DS11 and DS12 within first and second bus vessels 14 and 15 respectively, at 16 is a cable head unit constituted by disposing the cable head CHd, the line disconnecting switch DS13, and the earthing device ESW13 within a cable head vessel 17, and at 18 is an operating box. The main breaker unit 10, the first and second main bus units 12 and 13, the cable head unit 16 and the operating set 18 constitute a feeder unit GIS1.

First the constitution and disposition of the vessels will be described. The main breaker vessel 11 has a front opening 11a and a back opening 11b at the opposite ends thereof respectively. Flanges are provided at the respective ends of the openings 11a and 11b. First and second bus connecting openings 11c and 11d are formed in the upper surface of the main breaker vessel 11 at an axial interval. A cable head vessel connecting opening 11e is formed in the bottom surface of the main breaker vessel near the backside of the same coaxially with the second bus connecting opening 11d. These openings 11c, 11d and 11e are formed by a well-known technique, in which a pipe having a flange at the opening end thereof is welded around a hole formed in the side wall of the main breaker vessel.

The cable head vessel 17 is a cylindrical body disposed with the axis thereof extended vertically. A flanged upper opening 17a and a flanged lower opening 17b are formed at the upper end and at the lower end, respectively, of the cable head vessel 17. A back opening 17c facing behind the gas-insulated switchgear is formed in the upper part of the wall on the backside of the cable head vessel 17. A front opening 17d facing the front is formed in the lower part of the side wall on the front side of the cable head vessel 17. The back opening 17c and the front opening 17d of the vessel 17 also are formed by welding tubes each having a flange at the open end thereof to the side wall of the vessel 17. The upper opening 17a of the cable head vessel 17 is joined airtightly to the opening 11e formed in the lower surface of the main breaker vessel 11. The opening 17b formed at the lower end of the vessel 17 is closed airtightly by a bottom plate 19. The vessel 17 is supported on a mounting base 20.

The main bus vessels 14 and 15 have two tubular parts 14A and 14B and two tubular parts 15A and 15B perpendicularly intersecting each other in the form of a cross respectively. The main bus vessels 14 and 15 are connected at the lower ends of the tubular parts 14A and 15A through insulating spacers 21 and 22 to the bus connecting openings 11c and 11d formed in the upper surface of the main breaker vessel 11 respectively.

The operating box 18 is mounted on the mounting base 20 at a position on the front side of the main breaker vessel 11. The operating box 18 is provided on the front side thereof with a door 18A, which is opened for inspection. The backside of the operating set 18 and the front end of the main breaker vessel 11 are joined by suitable means. Thus all the vessels and the operating set are joined integrally and are supported firmly on the mounting base 20. In this embodiment, since the cable head vessel 17 is joined to the opening 11e formed near the back end of the main breaker vessel 17, the front side of the cable head vessel 17, the lower surface of the main breaker vessel 11 and the operating box 18 enclose a considerably wide space A.

The component equipments of each unit will be described hereinafter. The main breaker CB1 is formed by placing a breaking unit consisting of a movable contact, a fixed contact and an arc-estinguishing mechanism in a container 100 filled with SF6 gas. This breaker is inserted through the front opening 11a of the main breaker vessel 11 into the main breaker vessel 11 and is supported with the movable contact and the fixed contact disposed horizontally opposite to each other (with the breaking section disposed in a horizontal position) on a supporting plate 25 airtightly closing the opening 11a. In Fig. 1, only one breaker for one phase is illustrated, however, actually, three breakers CB1 for three phases are accommodated within the vessel 11 with the respective axes thereof extended in parallel to each other. The breakers for three phases are disposed so that the respective center axes thereof pass the vertices of a triangle (triangular disposition). A housing 26 accommodating the respective operating mechanisms of the breakers CB1 for three phases is attached to the outer surface of the supporting plate 25. The housing is disposed within the operating box 18. The operating mechanisms of the breakers CB1 for three phases are interlocked in the housing 26. An operating shaft 27 for simultaneously operating the breakers CB1 for three phases extends outside the housing 26 airtightly penetrating through the housing 26. The operating shaft 27 is interlocked by means of a linkage or the like to a breaker operating device 28 contained in the operating box 18. The operating device 28 operates the breakers CB1 for three phases simultaneously. The opposite end of the breaker CB1 is connected to a bus live conductor 31 connected to the bus and a line live conductor 32 connected to the cable head respectively. The earthing devices ESW11 and ESW12 for breaker inspection are interposed between the bus live conductor 31 and an earth potential part and between the line live conductor 32 and an earth potential part respectively. The current transformer CT1 is mounted on the line live conductor 32. The back opening 11b of the main breaker vessel 11 is closed airtightly with a cover plate 33. In this embodiment, the main breaker unit 10 consists of the main breaker vessel 11, the main breakers CB1, the earthing devices ESW11 and ESW12, and the current transformer CT.

Bus bars constituting the main bus BUS11 are disposed in a triangular disposition within the horizontal tubular parts 14B and 15B of the main bus vessels 14 and 15 of the first and second main bus units 12 and 13 respectively. These bus bars are supported on spacers airtightly closing the opposite ends of the tubular part 14B. The bus disconnecting switches DS11 and DS12 are placed in the vertical tubular parts 14A and 15A of the main bus vessel 14 and 15 respectively. One end of each of the bus disconnecting switches DS11 and DS12 is connected to the bus bars of the corresponding phase, while the other end of the same is connected through a buried conductor, not shown, airtightly penetrating through the insulating spacers 21 and 22 to a live conductor 31 connected to one end of the main breaker CB1.

The cable head CHd of the cable head unit 16 is supported on the bottom plate 19 closing the bottom opening of the cable head vessel 17. A cable C is led from an underground cable pit 35 through a through hole, not shown, formed in the bottom plate 19 into the cable head vessel and is connected to each cable head CHd. One end of the line disconnecting switch DS13 is connected to each terminal of the cable head CHd, while the other end of the line disconnecting switch DS13 is connected to the line live conductor 32 connected to the breaker CB1. The earthing device ESW13 is interposed between the terminal of the cable head CHd and an earth-potential part. The front opening 17d of the cable head vessel 17 is a connecting opening for connecting a unit accommodating a lightening arrester LA and an instrument potential transformer LPT or a testing voltage applying unit thereto. The back opening 17c is a work opening. The openings 17d and 17c are closed airtightly with the cover plates 36 and 37 respectively.

An operation box 40 accommodating an operating set for operating the bus disconnecting switches is attached to the outer surface of the cover plate 33 airtightly closing the back opening 11b of the main breaker vessel 11. An operating shaft for operating the bus disconnecting switches DS11 and DS13 is extended outside airtightly through the side walls of the main bus vessels 14 and 15 and is connected through a linkage to the operating set accommodated in the operating box 40. An operating box 41 accommodating an operating set for operating the line disconnecting switch DS13, an operating box 42 accommodating an operating set for operating the disconnecting switch inspection earthing devices ESW11 and ESW12, and an operating box accommodating an operating set for operating the cable head earthing device ESW13 are supported on the cover plate 37 closing the back opening 17c of the cable head vessel 17. Operating shafts for operating the disconnecting switch DS13, and the earthing devices ESW11, ESW12 and ESW13 are extended outside airtightly through the side wall of the vessel and are connected through linkages, not shown, to the operating sets accommodated in the operating boxes 41, 42 and 43 respectively.

The main breaker vessel 11, main bus vessels 14 and 15, and the cable head vessel 17 are of airtight construction and are filled with SF6 gas of a predetermined pressure.

As described hereinbefore, according to the present invention, disposing the cable head unit 16 under the main breaker unit 10 reduces the depth of the gas-insulated switchgear remarkably as compared with disposing a cable head unit behind a main breaker unit, and thereby the floor space for installing the gas-insulated switchgear can be reduced.

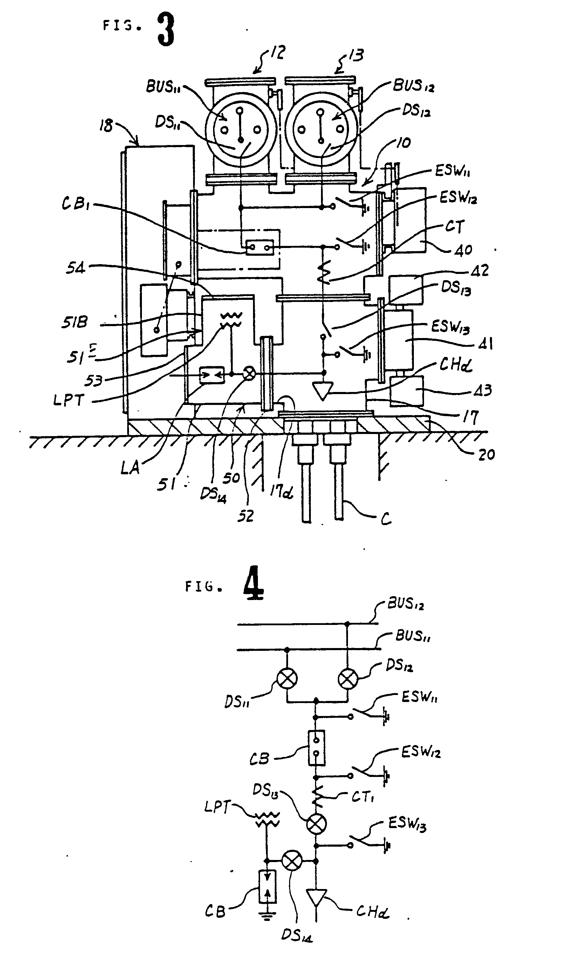

Furthermore, since the cable head unit 16 is disposed under the main breaker unit, the space in front of the cable head unit can be utilized for connecting additional equipments to the gas-insulated switchgear. For example, as shown in Fig. 3, an auxiliary unit 50 accommodating a lightening arrester LA, a disconnecting switch DS14 and a potential transformer LPT can be disposed in the space A formed in front of the cable head unit 16. The auxiliary unit 50 is formed by accommodating the lightening arrester LA, the disconnecting switch DS14 and the potential transformer LPT in a T-shaped vessel 51 consisting of a horizontal tubular part 51A and a vertical tubular part 51B and filling the vessel 51 with SF6 gas. One end of the horizontal tubular part 51A of the vessel 51 is connected through an insulating spacer 52 to the front opening 17d of the cable head vessel 17. The other end of the horizontal tubular part 51A of the vessel 51 is inserted into the operating box 18 so as to be supported by the operating box 18 and the opening of thereof is closed airtightly with a cover plate 54. The upper opening of the vertical tubular part 51B of the vessel 51 is closed airtightly with a cover plate 54. The lightening arrester LA is connected through the disconnecting switch DS14 and a burried conductor airtightly penetrating through the insulating spacer 52 to the terminal of the cable head CHd. The potential transformer LPT is connected through a disconnecting switch DS15 to a live conductor interconnecting the lightening arrester LA and the disconnecting switch DS14. A skeleton diagram showing the electrical constitution of each phase of this embodiment is shown in Fig. 4.

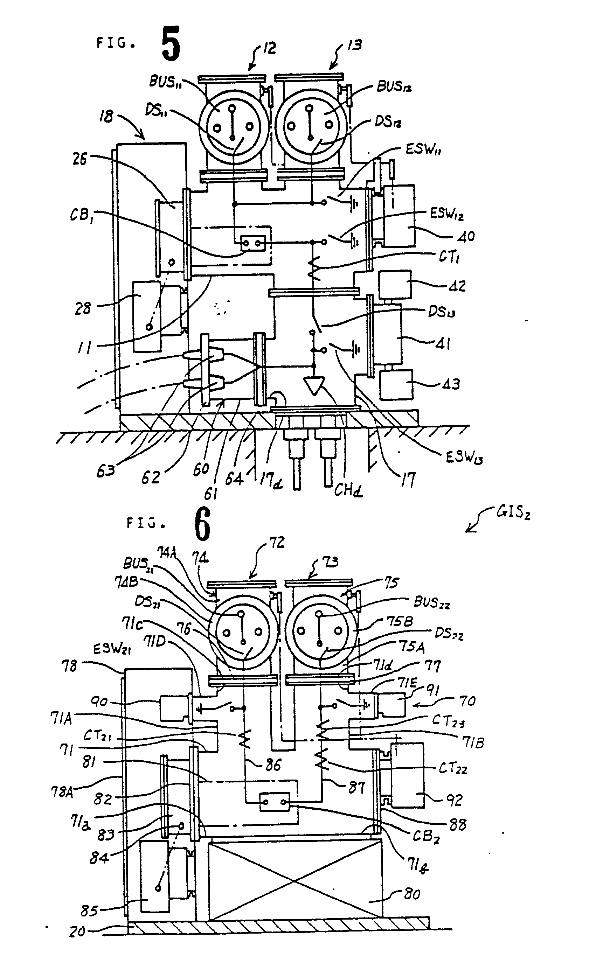

Fig. 5 illustrates an embodiment in which a testing voltage applying unit 60 is connected to a cable head unit 16. The testing voltage applying unit 60 has a tubular vessel 61, a supporting plate 62 closing one end of the vessel 61 and connectors 63 for connecting testing voltage applying cables thereto attached to the supporting plate 62. The other end of the vessel 61 is connected through an insulating spacer 64 to the front opening 17d of a cable head vessel 17. The terminals of the connectors 63 are connected through burried conductors airtightly penetrating through the insulating spacer 64 to the terminals of a cable head CHd. The vessel 61 is filled with SF6 gas.

In applying a testing voltage to the cable head for testing, testing voltage applying cables are inserted from the front side of an operating box 18 and are connected to bushings BS, and then a testing voltage is applied to the cable head by a testing power source with a disconnecting switch DS13 open.

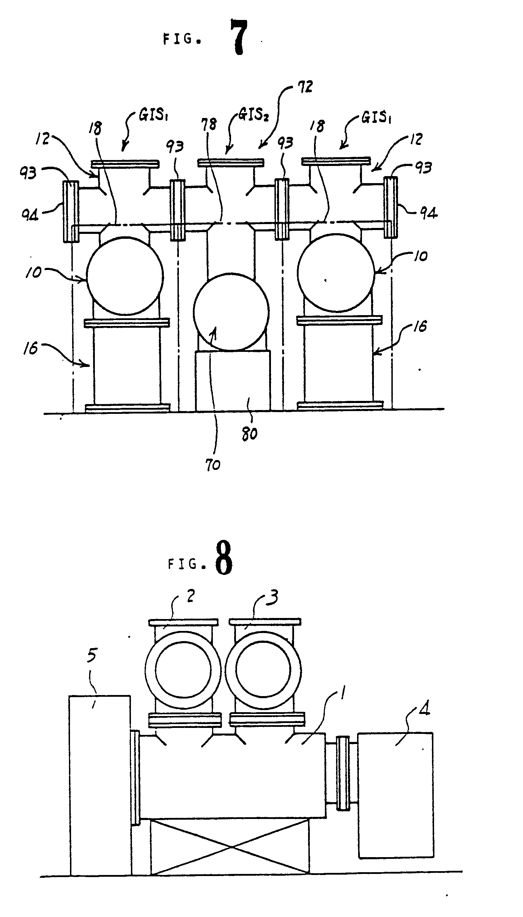

The embodiments described hereinbefore are exemplary applications of the present invention to a feeder unit for leading-in cables. When a gas-insulated switchgear comprises a plurality of the feeder units, the buses of a plurality of the feeder units are interconnected by means of bus connecting units. Fig. 6 illustrates an exemplary constitution of a bus connecting unit for such a gas-insulated switchgear. In Fig. 6, there are shown a bus connecting breaker unit 70 constituted by disposing bus connecting breakers CB2, bus connecting breaker inspecting earthing devices ESW21 and ESW22, and current transformers CT21, CT22 and CT23 in a horizontally elongate bus connecting breaker vessel 71, first and second bus connecting bus units 72 and 73 constituted by disposing buses BUS21 and BUS22, and bus disconnecting switches DS21 and DS22 in first and second bus connecting bus vessels 74 and 75 respectively, and an operating box 78. The bus connecting breaker unit 70, the first and second bus connecting bus units 72 and 73, and the operating box 78 constitute a bus connecting unit GIS2.

The bus connecting breaker vessel 71 has a front opening 71a and a back opening 71b at the opposite ends thereof respectively. The openings 71a and 71b are provided at the opening ends thereof with flanges respectively. Comparatively long tubes 71A and 71B each having a flange at the opening end thereof are disposed and welded to the upper surface of the bus connecting breaker vessel 71. The tubes 71A and 71B are spaced apart axially (horizontally) of the bus connecting breaker vessel 71 to form first and second bus connecting openings 71c and 71d. Branch tubes 71D and 71E of comparatively small diameters extending frontward and backward are provided near the upper ends of the tubes 71A and 71B respectively. The bus connecting breaker vessel 71 is supported on a frame 80 mounted on a base 20. In this embodiment, the lower surface of the bus connecting breaker vessel 71 is positioned below the lower surface of the main breaker vessel 11 of a feeder unit, while the bus connecting openings 71c and 71d are positioned at the same level as that of the bus connecting openings 11c and 11d of the feeder unit.

Similarly to the above-mentioned main bus vessel, the bus connecting bus vessels 74 and 75 have two tubular parts 74A and 74B and two tubular parts 75A and 75B perpendicularly intersecting each other in the form of a cross respectively. The bus connecting bus vessels 74 and 75 are connected at the lower openings of the tubular parts 74A and 75A through insulating spacers 76 and 77 to the bus connecting openings 71c and 71d formed in the upper surface of the bus connecting breaker vessel 71 respectively.

The operating box 78 is disposed on the base 20 in front of the bus connecting breaker vessel 71. The operating box 78 is provided on the front side thereof with a door 78A which is opened for inspection work. The operating box 71 is joined to the front end of the bus connecting breaker vessel 71 by suitable means.

Equipments constituting each unit will be described hereinafter. Each bus connecting breaker CB2 is constituted by accommodating a breaking unit consisting of a movable contact, a fixed contact and an arc extinguishing mechanism in a vessel 81 filled with SF6 gas. The breakers CB2 for three phases are disposed in a triangular disposition and are supported on a supporting plate 82 airtightly closing the front opening 71a of the bus connecting breaker vessel 71 with the breaking units in a horizontal position. A housing 83 accommodating an operating mechanism for operating the breakers CB2 for three phases is attached to the outer surface of the supporting plate 82 within the operating box 78. An operating shaft 84 for simultaneously operating the breakers CB2 for three phases is extended airtightly outside through and housing 83 and is connected through a linkage or the like to a breaker operating device 85 provided within the operating box 78. The breakers CB2 for three phases are operated simultaneously by means of the operating device 85. Live conductors 86 and 87 are connected to the opposite ends of each bus connecting breaker CB2. The live conductors 86 and 87 are extended through the tubes 71A and 71 and are connected to buried conductors buried in the insulating spacers 76 and 77 respectively. Breaker inspecting earthing devices ESW21 and ESW22 are provided in the branch tubes 71D and 71D of the breaker vessel 71 respectively. The nongrounded terminals of the earthing devices ESW21 and ESW22 are connected to live conductors 86 and 87 respectively. A current transformer CT21 is mounted on the live conductor 86, while current transformers CT22 and CT23 are mounted on the live conductor 87. In this bus connecting unit, the lower surface of the breaker vessel 71 is positioned below the lower surface of the braeker vessel of the feeder unit. Therefore, a wide space can be secured above the breakers CB2, and hence the current transformers CT21, CT22 and CT23 can easily be disposed in this space (in this embdoiment, within the tubes 71A and 71). The back opening 71b of the breaker vessel 71 is closed airtightly with a cover plate 88. In this embodiment, the bus connecting breaker vessel 71, the bus connecting breakers CB2, the earthing devices ESW21 to ESW23, and current transformers CT21 and CT23 constitute the bus connecting breaker unit 70.

Bus bars of the bus connecting bus BUS21 and BUS22 are disposed in a triangular disposition in the horizontal tubular parts 74B and 75B of the bus connecting bus vessels 74 and 75 of the first and second bus connecting bus units 72 and 73 respectively. These bus bars are supported on insulating spacers airtightly closing the opposite ends of the tubular part 74B. The bus disconnecting switches DS21 and DS22 for each phase are accommodated within the vertical tubular parts 74A and 75A of the bus connecting bus vessels 74 and 75 respectively. One end of each of the bus disconnecting switches DS21 and DS22 for each phase is connected to a bus bar of the corresponding phase. The respective other ends of the disconnecting switches are connected through buried conductors, not shown, airtightly penetrating through the insulating spacers 76 and 77 to live conductors 86 and 87 connected to the opposite ends of the bus connecting breakers CB2.

Operating sets 90 and 91 for operating the earthing devices ESW21 and ESW22 are supported on the outer end surfaces of the branch tubes 71D and 71E of the breaker vessel 71. An operating set 92 for operating the disconnecting switches DS21 and DS22 is supported on the cover plate 88.

The bus connecting breaker vessel 71, the bus connecting bus vessels 74 and the bus connecting bus vessel 75 are of airtight construction filled with SF6 gas of a predetermined pressure.

As illustrated in Fig. 7, the feeder unit GIS2 is disposed between a plurality of the feeder units GIS1 and the bus connecting bus units 72 and 73 are connected through insulating spacers 93 to the main bus units 12 and 13 disposed on the opposite ends of the bus connecting bus units 72 and 73. In this case, the operating boxes 18 of the feeder units GIS1 and the operating box 78 of the bus connecting unit GIS2 are arranged contiguously in a row of panels. Cover plates 94 are attached to the outer surfaces of the insulating spacers 93 provided at the free ends of the main bus units of the feeder units GIS1 disposed on the opposite sides of the bus connecting unit.

Effect of the invention

As apparent from what has been described hereinbefore, according to the present invention, the cable head unit of a feeder unit is disposed under the main breaker unit, and hence the depth of the gas-insulated switchgear can be reduced and the floor space necessary for installing the gas-insulated switch gear can be reduced. Furthermore, since it is not necessary to secure a wide work space behind the gas-insulated switchgear, the size of a building for installing the gas-insulated switchgear therein can be reduced. Still further, since the breaker vessel of the bus connecting unit is disposed with the lower surface thereof positioned below the lower surface of the breaker vessel of the feeder unit and thereby a wide space is secured within the breaker vessel of the bus connecting unit, the height of the bus connecting unit is advantageously the same as that of the feeder units and current transformers can be mounted on the live conductors connected to the opposite ends of the bus connecting breakers.

Claims

1. A multipolar gas-insulated switchgear comprising:
a main circuit-breaker unit (10) having a horizontal elongate grounded tank (11) with an axial line and containing a sealed insulating gas and circuit-breakers sections (CB) accommodated in said tank (11) in a horizontal position, said tank (11) being mounted parallel at a given height with respect to a horizontal ground plane (20),
at least one main bus unit (12, 13) having a horizontal elongate tank (14, 15) disposed above and connected to the top surface of the main circuit-breaker tank (11) and extending substantially perpendicular to the vertical plane passing through the axial line of said main circuit-breaker tank (11) said elongate bus tank (14, 15) containing multipolar bus bars (BUS 11, 12) connected to said circuit-breakers (CB) and a disconnecting switch (DS 11, DS 12) characterized in that a cable head unit (16) having a cable head tank (17) is disposed between said ground plane (20) and the bottom surface of the main circuit-breaker tank (11) which is connected to the cable head tank (17) said cable head tank containing a cable head (CHd) of substantially vertical cable ends (C) and a line disconnecting switch (DS 13) and that a box (18) including a circuit-breaker operating mechanism (28) is mounted on said horizontal ground plate (20) at the front side of the main circuit-breaker tank (11) at a given space from the cable head unit (16).

2. A switchgear according to claim 1, characterized in that the cable head tank (CHd) has a front opening (17d) disposed opposite to the mechanism box (28) for connecting a tank (51, 61) disposed in said given space between said box (18) and said cable head tank (CHd) and including additionnal equipment.

3. A switchgear according to claim 1 or 2, characterized in that the additionnal equipment tank (51) contains a lightening arrester device (LA) and a disconnecting switch (DS 14) of this lightening arrester device (LA).

4. A switchgear according to claim 1 or 2, characterized in that the additional equipment tank (61) contains connectors (63) for connecting testing voltage applying cables.

5. A switchgear according to anyone of the preceding claims, characterized in that two parallel main bus units (12, 13) are disposed above the top surface of the main circuit-breaker tank (11).

6. A switchgear according to anyone of the preceding claims, characterized in that it comprises a bus connecting unit (GIS2) constituted by a bus connecting breaker unit (70) having a bus connecting breaker tank (71) disposed adjacent and parallel to said main circuit-breaker tank (11) and containing breakers (CB2) each disposed with the breaking section thereof in a horizontal position and current transformers (CT 21, 22, 23), a bus connecting bus unit (72, 73) having a bus connecting bus tank (74, 75) connected to the top surface of said bus connecting breaker tank (71) and containing a bus (BUS 21, 22) together with a bus disconnecting switch (DS 21, 22) wherein said bus connecting breaker tank (71) is disposed with the top surface thereof disposed flush with the top surface of main circuit-breaker tank (11) and the bottom surface thereof disposed below the bottom surface of said circuit-breaker tank (11) and said main bus unit and said bus connecting bus unit (72, 73) are disposed at the same level and are interconnected.

**Patentansprüche**

1. Mehrpoliges gasisoliertes Schaltgerät mit:
einer Haupteistungsschalter-Einheit (10), die ein waagerechtes, längliches Gehäuse (11) mit einer axialen Linie aufweist, welches Isoliergas und waagerecht in dem Gehäuse (11) angeordnete Leistungsschalter (CB) aufweist, wobei das genannte Gehäuse (11) parallel in einer bestimmten Höhe in Bezug auf eine waagerechte Erdebene (20) angeordnet ist,
wenigstens einer Haupt-Sammelschienen-Einheit (12, 13) mit einem waagerechten, länglichen Gehäuse (14, 15), das mit der Oberseite des Haupt-Leistungsschalter-Gehäuses (11) verbunden ist und darüber angeordnet ist, und das sich ziemlich senkrecht zu der vertikalen Ebene erstreckt und durch die axiale Linie des genannten Haupt-Leistungsschalter-Gehäuses (11) führt, wobei das genannte längliche Sammelschienen-Gehäuse (14, 15) mehrpolige Sammelschienen (BUS 11, 12) enthält, die mit den genannten Leistungsschaltern (CB) verbunden sind, und einen Trennschalter (DS 11, DS 12), dadurch gekennzeichnet, dass eine Kabelendverschluss-Einheit (16) mit einem Kabelendverschluss-Gehäuse (17) zwischen der genannten Erdebene (20) und der Oberseite des Haupt-Leistungsschalter-Gehäuses (11) angeordnet ist, das mit dem Kabelendverschluss-Gehäuse (17) verbunden ist, welches einen Kabelendverschluss (CHd) mit ziemlich vertikalen Kabelenden (C) und einen Leitungs-Trennschalter (DS 13) enthält, und dass ein Kasten (18), in dem sich ein Leistungsschalter-Betätigungsmechanismus (28) befindet, auf der genannten waagerechten Erdebene (20) angeordnet ist, an der Vorderseite des Haupt-Leistungsschalter-Gehäuses (11) in einem gewissen Abschnitt der Kabelendverschluss-Einheit (16).

2. Schaltgerät gemäss Anspruch 1, dadurch gekennzeichnet, dass das Kabelendverschluss-Gehäuse (CHd) eine Voröffnung (17d) aufweist, die gegenüber dem Mechanismus-Kasten (28) angeordnet ist, zur Befestigung eines Gehäuses (51, 61), das in dem genannten gewissen Abschnitt zwischen dem genannten Kasten (18) und dem genannten Kabelendverschluss-Gehäuse (CHd) angeordnet ist und zusätzliche Ausrüstung enthält.

3. Schaltgerät gemäss Anspruch 1 oder 2, dadurch gekennzeichnet, dass das Gehäuse mit zusätzlicher Ausrüstung (51) eine Ableitervorrichtung (LA) und einen Transchalter (DS 14) dieser Ableitervorrichtung (LA) aufweist.

4. Schaltgerät gemäss Anspruch 1 oder 2, dadurch gekennzeichnet, dass das Gehäuse mit zusätzlicher Ausrüstung (61) Steckverbindungen (63) enthält zur Verbindung von Testspannung-Anwendungskabeln.

5. Schaltgerät gemäss irgendeinem der vorhergehenden Ansprüche, dadurch gekennzeichnet, dass zwei parallele Haupt-Sammelschienen-Einheiten (12, 13) über der Oberseite des Haupt-Leistungsschalter-Gehäuses (11) angeordnet sind.

6. Schaltgerät gemäss irgendeinem der vorhergehenden Ansprüche, dadurch gekennzeichnet, dass eine Sammelschienen-Verbindungseinheit (GIS2) aufweist, die von einer Sammelschienen-Schaltereinheit (70) gebildet wird, welche ein Sammelschienen-Verbindungsschaltergehäuse (71) aufweist, das neben und parallel zu dem genannten Haupt-Leistungsschalter-Gehäuse (11) angeordnet ist und das Schalter (CB2) enthält, von denen jeder mit der Unterbrechungszone in waagerechter Lage angeordnet ist, und Stromwandler (CT 21, 22, 23), eine Sammelschienen-Verbindungseinheit (72, 73) mit einem Sammelschienen-Verbindungsgehäuse (74, 75), das mit der Oberseite des genannten Sammelschienen-Verbindungsschaltergehäuse (71) verbunden ist und Sammelschienen (BUS 21, 22) aufweist mit einem Sammelschienen-Trennschalter (DS 21, 22), in dem das genannte Sammelschienen-Verbindungsschaltergehäuse (71) mit seiner Oberfläche in Berührung mit der Oberseite des Haupt-Leistungsschaltergehäuses (11) angeordnet ist, und in dem die genannte Sammelschienen-Einheit und die genannte Sammelschienen-Verbindungseinheit (72, 73) auf gleicher Höhe angeordnet sind und miteinander verbunden sind.

**Revendications**

1. Appareillage de commutation multipolaire à isolation gazeuse comprenant:

une unité disjoncteur principale (10) ayant une enveloppe (11) allongée horizontale mise à la terre ayant une ligne axiale et contenant un gaz isolant et des disjoncteurs (CB) logés horizontalement dans cette enveloppe (11), laquelle est disposée parallèlement à une certaine hauteur par rapport à un plan horizontal de terre (20),

au moins un jeu de barres principal (12, 13) ayant une enceinte allongée horizontale (14, 15) disposée au-dessus et connectée à la surface supérieure de l'enveloppe disjoncteur principale (11) et s'étendant sensiblement perpendiculairement au plan vertical passant par la ligne axiale de ladite enveloppe disjoncteur principale (11), ladite enveloppe jeu de barres allongée (14, 15) contenant un jeu de barres multipolaire (BUS 11, 12) connecté auxdits disjoncteurs (CB) et un sectionneur (DS11, DS12), caractérisé en ce qu'une unité d'extrémité de câble (16) ayant une enveloppe de tête de câble (17) est disposée entre ledit plan de terre (20) et la surface inférieure de l'enveloppe disjoncteur principale (11) qui est connectée à l'enveloppe de tête de câble (17), ladite enveloppe de tête de câble (17) contenant une tête de câble (CHd), à extrémités (C) de câble sensiblement verticales et un sectionneur de ligne (DS13) et qu'un coffret (18) de logement d'un mécanisme de commande (28) du disjoncteur est disposé sur ladite plaque de terre (20) à l'avant de l'enveloppe disjoncteur principale (11) à un certain espace de l'unité d'extrémité de câble (16).

2. Appareillage selon la revendication 1, caractérisé en ce que l'enveloppe de tête de câble (CHd) a une ouverture frontale (17d), disposée en face du coeffret de mécanisme (28), pour la fixation d'une enveloppe (51, 61) disposée dans ledit certain espace entre ledit coffret (18) et ladite enveloppe de tête de câble (CHd) et contenant de l'équipement additionnel.

3. Appareillage selon la revendication 1 ou 2, caractérisé en ce que ladite enveloppe d'équipement additionnel (51) contient un dispositif parafoudre (LA) et un sectionneur (DS14) dudit dispositif parafoudre (LA).

4. Appareillage selon la revendication 2, caractérisé en ce que ladite enveloppe d'équipement additionnel (61) contient des connecteurs (63) pour la connexion des câbles d'application d'une tension de test.

5. Appareillage selon l'une quelconque des revendications précédentes, caractérisé en ce que deux unités parallèles de jeux de barres principaux (12, 13) sont disposées au-dessus de la surface supérieure de l'enveloppe disjoncteur principale (11).

6. Appareillage selon l'une quelconque des revendications précédentes, caractérisé en ce qu'il comprend une unité de connexion (GIS2) de jeux de barres constituée d'une unité disjoncteur (70) de connexion de jeux de barres ayant une enveloppe (71) de disjoncteur de connexion de jeux de barres et contenant des disjoncteurs (CB2), chacun disposé avec sa zone d'interruption horizontale et des transformateurs de courant (CT 21, 22, 23), une unité de connexion de jeux de barres (72, 73) ayant une enveloppe de connexion de jeux de barres (74, 75) connectée à la surface supérieure de l'enveloppe (71) du disjoncteur de connexion de jeux de barres et contenant un jeu de barres (BUS 21, 22) avec un sectionneur de jeu de barres (DS 21, 22), dans lequel ladite enveloppe (71) du disjoncteur de connexion de jeux de barres est disposée avec la face supérieure affleurant avec la surface supérieure de l'enveloppe disjoncteur principale (11) et la surface inférieure disposée en-dessous de la surface inférieure de ladite enveloppe disjoncteur principale (11) et que ladite unité jeu de barres principale et ladite unité de connexion de jeux de barres (72, 73) sont disposées au même niveau et sont interconnec-tées.

FIG. **1**

FIG. **2**

FIG. **3**

FIG. **4**

FIG. **5**

FIG. **6**

GIS₂

3

FIG. **7**

FIG. **8**